# EUROPEAN PATENT APPLICATION

(11) **EP 2 289 731 A2**
(43) Date of publication of application: **02.03.2011**
(21) Application number: 10382201.1
(22) Date of filing: 19.07.2010
(51) Int. Cl.: B60L 13/03

(54) **Traction system for a vehicule**

(30) Priority: 21.07.2009 ES 200901620
(71) Applicant: Simon, S.A., 28760 Tres Cantos (Madrid) (ES)
(72) Inventor: Lorenzo Villanova, Juan Carlos, E- 28760, Tres Cantos (Madrid) (ES); Rivas Conde, Javier José María, 28008 madrid (ES); Sánchez Herradon, Luis Mariano, E- 28760, Tres Cantos (Madrid) (ES); De Santiago Cid, José Ignacio, E- 28760, Tres Cantos (Madrid) (ES)
(74) Representative: ABG Patentes, S.L.

(57) **Abstract**

The invention relates to a traction system of a vehicle along a predefined path. The traction system object of the invention comprises a linear synchronous motor which is comprised of:
• a moving element comprised of permanent magnets which is movable and which is arranged attached to the vehicle such that the moving element drives the vehicle;
• a stator comprising independent units comprised of at least one core and an induction coil for inducting an electromagnetic field that is movable such that the moving element is driven by traction of the force of the inducted electromagnetic field following the movement of the electromagnetic field;

A characterizing feature of the invention is that the stator is located under a surface which is the moving surface of the moving element and that only the independent units which are under the projection of the vehicle on the stator are energized.

## Description

### Object of the Invention

The present invention relates to a traction system of a vehicle along a predefined path. In this invention, vehicle is interpreted as any element suitable for the transport of loads or of people.

The traction system object of the invention comprises:
• a linear synchronous motor which is comprised of:
   • a moving element comprised of permanent magnets which is movable and which is arranged attached to the vehicle such that the moving element drives the vehicle;
   • a stator comprising independent units comprised of at least one core and an induction coil for inducting an electromagnetic field that is movable such that the moving element is driven by traction of the force of the inducted electromagnetic field following the movement of the electromagnetic field;
• means for determining the position of the vehicle;
• commutation means for commutating the supply of the current of the independent units; and
• control means activating the supply through the commutation means of determined independent units depending on the position of the vehicle;

A characterizing feature of the invention is that the stator is located under a surface which is the moving surface of the moving element, and that the control means are such that the commutation of the supply of the independent units determines the supply only of independent units which are under the projection of the vehicle on the stator.

The system object of the invention thus energizes only those independent units which at all times of the movement of the vehicle are located under the projection of the vehicle whereas those which are located outside the projection of the vehicle are not energized and therefore they do not generate an electromagnetic field which could affect other different adjoining elements of the vehicle.

### Background of the Invention

Linear motors the moving element of which is associated with the movement of a vehicle are known in the state of the art. Some of the traction systems comprising a linear synchronous motor consist of a moving element made up of permanent magnets and a stator comprising independent units formed by cores and induction coils for inducting an electromagnetic field such that the moving element is driven by traction of the force of the inducted electromagnetic field following the movement of the electromagnetic field.

An example of systems of this type is patent application W02004/030975 relating to a suspension, guidance and propulsion system for vehicles using magnetic forces.

These systems also typically consist of means for determining the position of the vehicle, as well as commutation means for commutating the supply of the current of the independent units and control means activating the supply depending on the position of the vehicle.

However, there is a need to integrate traction systems of this type in areas of passage, such as city streets or load handling warehouses. Current systems known have not been able to be integrated in these environments because they usually comprise pathways which need to be located in a confined space and this would interfere with the remaining traffic, combined with the fact that previous civil engineering works may render their use unsuitable in determined areas such as in historical centers of cities, for example.

Other systems which have been integrated in areas of passage are also known, such as those systems which make use of an overhead cable for their movement. These transport systems have the drawback of causing a huge visual and physical impact on the environment due to the use of the overhead cable itself.

The present invention solves the aforementioned technical problem by means of a traction system of a vehicle which allows its integration in areas of passage. It furthermore has the advantage of not generating emissions and minimizing noise.

### Description of the Invention

The movement of the vehicle is along a predefined path. This movement is performed as a result of the tractive force of a linear synchronous motor.

Vehicle is interpreted as any device that is useful for the transport of loads or people, for example, a collective transport vehicle, a freight container or even a smaller sized transport element suitable for handling material in a warehouse.

The linear motor which allows the traction of the vehicle generates an electromagnetic field traveling along the path and to that end comprises:
• a moving element comprised of permanent magnets which is movable following the predefined path and which is arranged attached to the vehicle such that the moving element drives the vehicle;
• a stator comprising independent units comprised of at least one core and an induction coil for inducting an electromagnetic field wherein:
   o each of the independent units is capable of generating at least two magnetic poles oriented opposite one another and spaced apart at a distance such that the moving element is capable of communicating the magnetic fields of both poles giving rise to a closed magnetic loop;
   o the two magnetic poles that are inducted and oriented opposite one another are movable such that the moving element is driven by traction of the force of the inducted electromagnetic field following the movement of said inducted magnetic poles;
   • the independent units are aligned according to the predefined path allowing the inducted electromagnetic field to be movable along said predefined path;

Additionally, the system object of the invention also comprises:
- means for determining the position of the vehicle;
- commutation means for commutating the supply of the current of the independent units;
- control means activating the supply through the commutation means of determined independent units depending on the position of the vehicle;

A characterizing feature of the invention is that the stator is located under a surface which is the moving surface of the moving element, and that the control means are such that the commutation of the supply of the independent units determines the supply only of independent units which are under the projection of the vehicle on the stator. This projection also includes the independent unit or units located under the moving element.

Under the surface indicates that it can be adjacent, i.e., flush with the surface, or spaced apart from the latter towards the interior thereof. The fact that the stator is located under the moving surface allows the existence of passage on the stator itself that is different from the moving element of the linear motor. Therefore, this allows integrating the traction system object of the invention in areas of passage such as city streets, for example, which can have road traffic and pedestrian flow.

By energizing the units located under the projection of the vehicle only in this area, an electromagnetic field is created such that the mentioned electromagnetic field does not exist outside the projection of the vehicle because the coils are not energized, thereby preventing that the rest of the path made up of the independent units can interfere with elements or people that may be traveling on it.

The fact that only those independent units located under the projection of the vehicle are energized does not necessarily mean that each and every one of the independent units located under the mentioned projection are energized, but rather those independent units which are outside the projection will not be energized.

Until now it was not possible to integrate known systems comprising linear motors for the traction of vehicles in sections of streets of passage due to the aforementioned problems of interferences with the remaining vehicles and people and of the complexity of the civil engineering work.

The invention thus makes the installation of this traction system accessible in, for example, streets open to the public or any area of passage of people or vehicles, without the need for confining the installation for the purpose of preventing access to the energized path because the vehicle itself prevents people or objects from being able to access the energized part of the path because the chassis of the vehicle prevents it.

### Description of the Drawings

The present specification is contemplated with drawings that illustrate the preferred embodiment and do not limit the invention.
Figure 1 is a schematic depiction of an embodiment of the system object of the invention which shows the forward movement sequence of a vehicle together with the supply sequence of independent units located under the projection thereof.
Figure 2 is a depiction of the lines of flux of an electromagnetic field of a linear motor according to an embodiment of the invention.
Figure 3 is a perspective view of a depiction of a coil unit of the stator of a linear motor according to an embodiment.

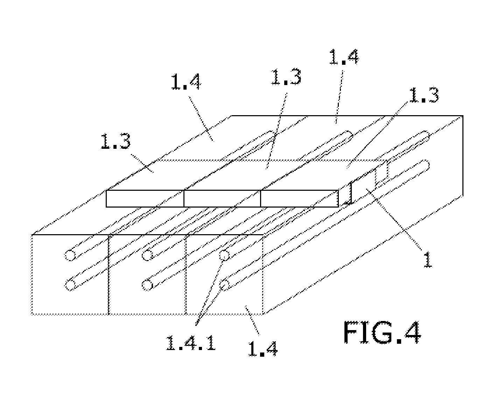

Figure 4 is a schematic depiction of a set of blocks of independent units according to an embodiment.
Figure 5 is a schematic depiction of a vehicle attached to the moving element and located on a moving surface.

### Preferred Embodiment of the Invention

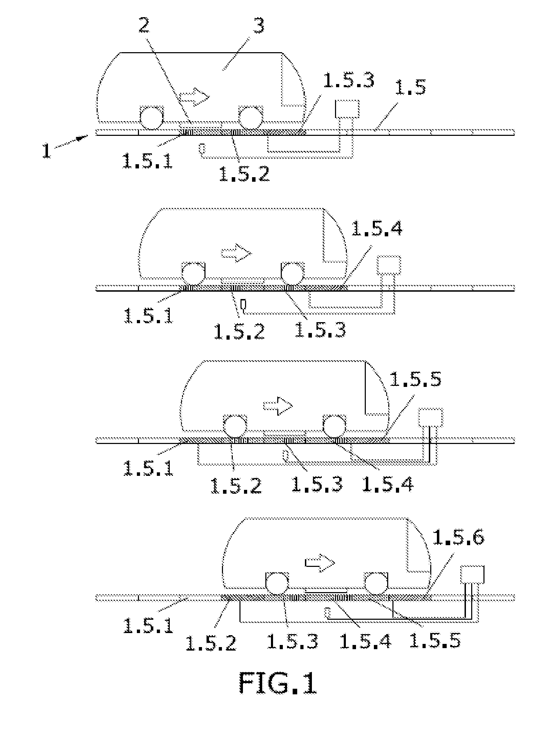

Figure 1 depicts a diagram showing a supply sequence of independent units. The embodiment shown comprises a stator (1) formed by means of adjacent independent units (1.5) such that they define the path. The moving element (2) is located in the lower part of the vehicle (3).

In the first image of the forward movement sequence of the vehicle (3), two of the independent units (1.5.1, 1.5.2) located under the projection of the vehicle (3) are energized, while the independent unit (1.5.3) located under the projection of the vehicle (3) and in the front part according to the forward movement direction of said vehicle (3) is being activated.

In the second image of the forward movement sequence of the vehicle (3), the two independent units (1.5.1, 1.5.2) of the first sequence are energized together with the independent unit (1.5.3) which was previously being activated and which is also energized. Again, the independent unit (1.5.4) located under the projection of the vehicle (3) and in the front part according to the forward movement direction of said vehicle (3) is being activated.

In the third image, all the independent units (1.5) located under the projection of the vehicle (3) are energized (1.5.2, 1.5.3, 1.5.4) or are being activated (1.5.5) or deactivated (1.5.1). The independent unit (1.5.1) which is deactivated is the one located under the projection of the vehicle (3) and in the rear part according to the forward movement direction of said vehicle (3).

This same pattern is reproduced in the fourth image in which the independent units located under the projection of the vehicle (3) and in its front part (1.5.6) and rear part (1.5.2) are being activated and deactivated, respectively.

It can be seen in the entire sequence that no independent unit (1.5) outside the projection of the vehicle (3) is energized and that not necessarily all the independent units (1.5) which are located under the projection of the vehicle (3) are energized, for example, during the start and stop of said vehicle (3) or in those vehicles (3) comprising more than one moving element (2).

The vehicle (3) could be moved in both directions by simply energizing the corresponding independent units (1.5).

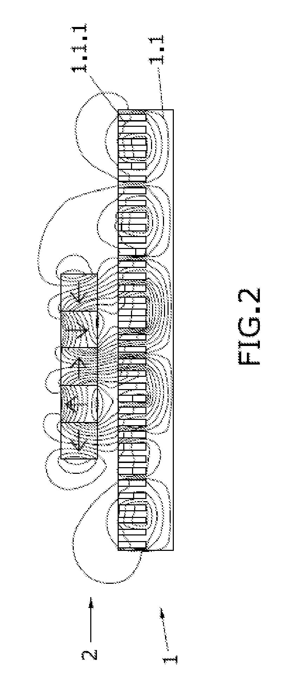

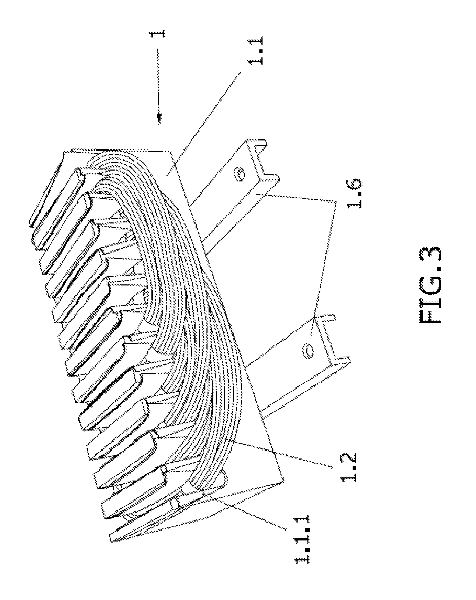

Figure 2 depicts a preferred embodiment of the stator (1) and of the moving element (2) of the linear motor of the system. In the embodiment shown, the stator (1) is made up of a ferromagnetic core (1.1) configured according to a block from which there emerges a plurality of parallel and essentially equally distributed projections (1.1.1) between the grooves of which there are located the induction coils (1.2), see Figure 3. The ferromagnetic core (1.1) could adopt any shape other than that shown, such as an L or U shape, for example.

In the embodiment shown in Figures 2 and 3 the linear motor has a three-phase supply and comprises two coils (1.2) for each phase, i.e., a total of six coils (1.2).

The fact that the core (1.1) is ferromagnetic allows, in addition to increasing the inductance of the linear motor, establishing between the moving element (2) which is formed by permanent magnets and the ferromagnetic core (1.1) a magnetic attraction force, even when the coils (1.2) are not being energized. This magnetic attraction force allows a self-centering of the moving element (2) and therefore of the vehicle (3). The need for additional guiding means of the vehicle (3), such as by means of inserting wheels in a groove marking the path, or through optical guiding means, for example, is thus reduced.

However, it is possible that in different applications and due to problems of inertia of the vehicle (3) or in determined speed ranges of said vehicle (3), the previous self-guiding is not enough. To that end, the system object of the invention could have additional guiding means of the type mentioned or of a different type.

Even though in the preferred embodiment the independent unit (1.5) has a three-phase supply, there being two coils (1.2) for each phase, it could also comprise a single-phase system with a single coil (1.2), even the linear motor could also be polyphase.

In the preferred embodiment, the current in one of the phases circulates in the direction opposite that of the other two for the purpose of maximizing the efficiency of the motor by maximizing the peak of the magnetic field that is created, thus achieving a movable wave with greater amplitude.

The independent units (1.5) are grouped in blocks that can be installed under the surface, wherein each block has a supply line of the independent unit (1.5). In the preferred embodiment, each of these independent units (1.5) of the stator (1) is embedded in a block (1.3) of dielectric material, usually resin.

Due to the high attractive forces generated between the independent units (1.5) and the moving element (2), the cores of the independent units (1.5) comprise means which counteract these attractive forces.

These means for counteracting the attractive forces between the stator (1) and the moving element (2) comprise:
- attachment means for attaching the core (1.1) of the independent unit (1.5) to the terrain; or
- ballast means for ballasting the core (1.1) of the independent unit (1.5); or
- resistant means connecting the core (1.1) of the independent unit (1.5) to treads of the surface for the rolling of rolling elements of the vehicle (3) or rolling elements of the moving element (2) or of both (2, 3) ;
- or any combination of the previous means.

For example, the previously described block (1.3) of resin can be attached to sections (1.6), such as those depicted in Figure 3, which allow the screwing thereof to the terrain.

Another objective of the present invention is to provide means which allow the traction of the vehicle (3) with the least possible civil engineering work in the shortest time possible and with the least intervention in the environment in which the vehicle (3) is intended to travel.

Likewise, the blocks (1.3) of resin can be integrated in a typically parallelepipedic block (1.4) of, for example, concrete which, once installed, will be aligned such that the cores (1.1) of the blocks (1.3) of resin are arranged aligned such that they define the path of movement of the vehicle (3).

The block (1.4) of concrete would perform the previously described ballasting function. Each block (1.4) of concrete could comprise one or more blocks (1.3) of resin, i.e., one or more independent units (1.5).

These blocks (1.4) of concrete furthermore have the advantage that for their installation it is only necessary to make trenches in the pavement in which the blocks (1.4) of concrete are inserted and the mentioned trenches are subsequently closed, with the advantage that this entails in terms of the speed of the necessary installation.

The blocks (1.4) of concrete comprise connection means for the supply lines at their ends. To that end, the blocks (1.4) of concrete comprise holes (1.4.1) for the passage of supply cables of the independent units (1.5) as well as other supply cables to the remaining concatenated blocks (1.4).

These blocks (1.4) will preferably be located under the pavement or flush with the pavement such that they allow the flow of other vehicles or people on them (1.4). In the event that the path describes a curve, the blocks (1.3) of dielectric material can have beveled corners for the purpose of favoring the fit between consecutive blocks (1.3, 1.4) in curved paths. The spaces between bevels of blocks (1.3) of dielectric material arranged consecutively can comprise a wedge of ferromagnetic material for improving the continuity of the electromagnetic flux.

Additionally, the blocks of concrete (1.4) can also comprise the treads of the vehicle (3) or of the moving element (2) or of both (2, 3).

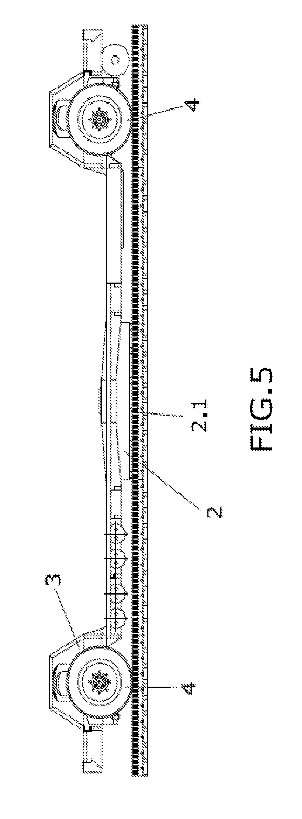

Figures 1 and 5 depict the moving element (2) attached to the lower part of the vehicle (3) such that it drives the latter (3) on the pavement.

In the embodiment shown, the moving element (2) made up of permanent magnets comprises a Halbach array of said magnets. The Halbach array increases the magnetic field in one of the faces of the array whereas it minimizes the magnetic field in the opposite face. In the preferred embodiment, the Halbach array is such that the magnetic field is minimized in the face attached to the vehicle (3). This array is particularly advantageous in the event that the vehicle (3) carries people because it minimizes the magnetic flux towards said people.

The arrangement of permanent magnets of the moving element (2) is comprised in a cage which allows a fastening confinement due to the large attractive forces generated by the permanent magnets with respect to one another.

Additionally, the moving element (2) can have a magnetic closure or shield of the field. This shield is located between the moving element (2) and the vehicle (3). The shield can be U-shaped such that the vehicle (3) is located above the shield. Other embodiments are possible, such as a sheet, for example, located between the moving element (2) and the vehicle (3).

The moving element (2) maintains a predetermined range of separating distances with the stator (1), which is necessary for the moving element (2) - stator (1) attraction, but it keeps both elements (1, 2) separated because the attractive force would cause the moving element (2) and the stator (1) to be attached. This separation is achieved by means of rolling elements (2.1) located in the lower part of the moving element (2) and which are intended for rolling on the pavement. It can additionally have rigid wheels for supporting the rolling elements (2.1) in this function.

The moving element (2) can comprise a means which divides it into at least two bodies which are attached along a line but which can pivot with respect to one another. This is particularly useful when the vehicle (3) is intended for moving on a surface having changes in slope.

The means for detecting the position of the vehicle (3) can consist of position sensors which detect the presence of the vehicle (3) or, for example, electromagnetic field sensors, because according to the invention there is only an electromagnetic field in the area in which the vehicle (3) is located.

The sections of path, sections being interpreted as a set of concatenated independent units (1.5) forming part of the path, will be controlled by sub-stations that will essentially comprise a control automaton intended for receiving signals from the sensors and energizing the corresponding independent units (1.5) and a converter for the supply current of the coils (1.2) which allows varying the frequency and therefore the speed of the vehicle (3).

The variation of thrust of the vehicle (3) by means of the variation of the intensity is also possible.

The vehicle (3) will additionally be supported on the surface by means of pneumatic wheels (4).

## Claims

1. A traction system for a vehicle along a predefined path comprising a linear synchronous motor in turn comprising:
• a moving element (2) comprised of permanent magnets which is movable following the predefined path and which is arranged attached to the vehicle (3) such that the moving element (2) is intended for driving the vehicle (3) ;
• a stator (1) comprising independent units (1.5) formed by at least one core (1.1) and an induction coil (1.2) for inducting an electromagnetic field wherein:
○ each of the independent units (1.5) is capable of generating at least two magnetic poles oriented opposite one another and spaced apart at a distance such that the moving element (2) is capable of communicating the magnetic fields of both poles giving rise to a closed magnetic loop;
○ the two magnetic poles that are inducted and oriented opposite one another are movable such that the moving element (2) is driven by traction of the force of the inducted electromagnetic field following the movement of said inducted magnetic poles;
○ the independent units (1.5) are aligned according to the predefined path allowing the inducted electromagnetic field to be movable along said predefined path;
wherein the system additionally comprises:
• means for determining the position of the vehicle (3);
• commutation means for commutating the supply of the current of the independent units (1.5);
• control means activating the supply through the commutation means of determined independent units (1.5) depending on the position of the vehicle (3);
**characterized in that**
the stator (1) is located under a surface either adjacent to or spaced from the latter, which is the moving surface of the moving element (2), and the control means are such that the commutation of the supply of the independent units (1.5) determines the supply only of independent units (1.5) which are under the projection of the vehicle (3) on the stator (1) including the independent unit or units (1.5) located under the moving element (2).

2. The system according to claim 1, **characterized in that** it is a three-phase linear synchronous motor.

3. The system according to any of the previous claims, wherein the moving element (2) is attached to the lower part of the vehicle (3).

4. The system according to any of the previous claims, wherein the independent units (1.5) are embedded in blocks (1.3) of dielectric material.

5. The system according to any of the previous claims, wherein the core (1.1) of the independent unit (1.5) comprises means for counteracting the attractive forces between the stator (1) and the moving element (2).

6. The system according to claim 5, **characterized in that** the means for counteracting the attractive forces between the stator (1) and the moving element (2) are:
• attachment means for attaching the core (1.1) of the independent unit (1.5) to the terrain; or
• ballast means for ballasting the core (1.1) of the independent unit (1.5); or
• resistant means connecting the core (1.1) of the independent unit (1.5) to treads of the surface for the rolling of rolling elements of the vehicle (3) or of rolling elements of the moving element (2) or of both (2, 3) ;
• or any combination of the previous means.

7. The system according to claims 4 and 6, wherein one or more blocks (1.3) of dielectric material are arranged integrated in a block (1.4) of concrete such that the cores (1.1) of the blocks (1.3) of resin are arranged aligned such that they define the path of movement of the vehicle (3).

8. The system according to claim 7, wherein the blocks (1.4) of concrete comprise at least one hole (1.4.1) for a supply line of the independent unit (1.5).

9. The system according to claim 7, wherein the blocks (1.3) of dielectric material have beveled corners for the purpose of favoring the fit between consecutive blocks (1.3, 1.4) in curved paths.

10. The system according to claim 9, wherein the spaces between bevels of blocks (1.3) of dielectric material arranged consecutively comprise a wedge of ferromagnetic material for improving the continuity of the electromagnetic flux.

11. The system according to any of the previous claims, wherein the moving element (2) comprises permanent magnets according to a Halbach array (2.1).

12. The system according to any of the previous claims, wherein the arrangement of permanent magnets of the moving element (2) is comprised in a cage allowing their fastening confinement.

13. The system according to any of the previous claims, wherein the moving element (2) has a shield for the magnetic field such that the vehicle (3) is located above the shield.

14. The system according to any of the previous claims, wherein the independent units (1.5) are formed by a ferromagnetic core (1.1) configured according to a block from which there emerges a plurality of parallel and essentially equally distributed projections (1.1.1) on which the induction coils (1.2) are located.

15. The system according to claims 2 and 14, **characterized in that** the stator (1) comprises six coils (1.2), two for each phase of the current, the current in one of them circulating in the opposite direction.

16. The system according to any of the previous claims, **characterized in that** the moving element (2) moves on the surface maintaining a range predefined of distances with the stator (1).

17. The system according to claim 16, wherein the moving element (2) comprises rolling elements (2.1) defining the minimum distance between said moving element (2) and the surface on which the vehicle (3) moves.

18. The system according to any of the previous claims, **characterized in that** it comprises sub-stations comprising a control automaton intended for receiving signals from the means for determining the position of the vehicle (3) and energizing the corresponding independent units (1.5) and a converter for the supply current of the coils which allows varying the frequency.
